# EUROPEAN PATENT APPLICATION

(11) **EP 1 612 642 A2**
(43) Date of publication of application: **04.01.2006**
(21) Application number: 05104387.5
(22) Date of filing: 24.05.2005
(51) Int. Cl.: G06F 1/00

(54) **Systems and methods for licensing operating systems using an emulated computing environment**

(30) Priority: 30.06.2004 US 882827
(71) Applicant: MICROSOFT CORPORATION, Redmond, Washington 98052-6399 (US)
(72) Inventor: Neil, Mike, Redmond, WA 98052 (US)
(74) Representative: Zimmer, Franz-Josef

(57) **Abstract**

Several embodiments of the present invention provide means for collecting license revenue for operating systems or applications software that resides in a virtualized computer system. Certain of these embodiments are specifically directed to providing a means for collecting license revenue for modem or legacy operating systems or applications in a virtual machine environment and further provide an ongoing revenue stream, rather than a one-time transaction, for a software manufacturer. More specifically, certain embodiments are directed to a system for and method of providing software license enforcement by using a license manager in a virtual machine environment and thereby provide improved methods of collecting license revenue in a computer system that supports legacy operating systems and applications. Finally, several embodiments of the present invention are directed to providing incremental software support and upgrades for operating systems and applications that run in a virtual machine environment.

## Description

### CROSS-REFERENCE

This application is related by subject matter to the invention disclosed in the following commonly assigned application: U.S. Patent Application No. 10/274,298 (Atty. Docket No. MSFT-2564 / 304108.01), filed on October 18, 2002 and entitled, "SOFTWARE LICENSE ENFORCEMENT MECHANISM FOR AN EMULATED COMPUTING ENVIRONMENT," the entirety of said patent applications being hereby incorporated herein by reference.

### FIELD OF THE INVENTION

The present invention generally relates to the field virtual machines (also known as "processor virtualization") and software that executes in a virtual machine environment. More specifically, the present invention is directly related to a method for collecting operating system license revenue using a virtual machine environment.

### BACKGROUND OF THE INVENTION

Computers include general purpose central processing units (CPUs) that are designed to execute a specific set of system instructions. A group of processors that have similar architecture or design specifications may be considered to be members of the same processor family. Examples of current processor families include the Motorola 680X0 processor family, manufactured by Motorola, Inc. of Phoenix, Arizana; the Intel 80X86 processor family, manufactured by Intel Corporation of Sunnyvale, California; and the PowerPC processor family, which is manufactured by Motorola, Inc. and used in computers manufactured by Apple Computer, Inc. of Cupertino, California. Although a group of processors may be in the same family because of their similar architecture and design considerations, processors may vary widely within a family according to their clock speed and other performance parameters.

Each family of microprocessors executes instructions that are unique to the processor family. The collective set of instructions that a processor or family of processors can execute is known as the processor's instruction set. As an example, the instruction set used by the Intel 80X86 processor family is incompatible with the instruction set used by the PowerPC processor family. The Intel 80X86 instruction set is based on the Complex Instruction Set Computer (CISC) format. The Motorola PowerPC instruction set is based on the Reduced Instruction Set Computer (RISC) format. CISC processors use a large number of instructions, some of which can perform rather complicated functions, but which require generally many clock cycles to execute. RISC processors use a smaller number of available instructions to perform a simpler set of functions that are executed at a much higher rate.

The uniqueness of the processor family among computer systems also typically results in incompatibility among the other elements of hardware architecture of the computer systems. A computer system manufactured with a processor from the Intel 80X86 processor family will have a hardware architecture that is different from the hardware architecture of a computer system manufactured with a processor from the PowerPC processor family. Because of the uniqueness of the processor instruction set and a computer system's hardware architecture, application software programs are typically written to run on a particular computer system running a particular operating system.

Computer manufacturers want to maximize their market share by having more rather than fewer applications run on the microprocessor family associated with the computer manufacturers' product line. To expand the number of operating systems and application programs that can run on a computer system, a field of technology has developed in which a given computer having one type of CPU, called a host, will include an emulator program that allows the host computer to emulate the instructions of an unrelated type of CPU, called a guest. Thus, the host computer will execute an application that will cause one or more host instructions to be called in response to a given guest instruction. Thus the host computer can both run software design for its own hardware architecture and software written for computers having an unrelated hardware architecture. As a more specific example, a computer system manufactured by Apple Computer, for example, may run operating systems and program written for PC-based computer systems. It may also be possible to use an emulator program to operate concurrently on a single CPU multiple incompatible operating systems. In this arrangement, although each operating system is incompatible with the other, an emulator program can host one of the two operating systems, allowing the otherwise incompatible operating systems to run concurrently on the same computer system.

When a guest computer system is emulated on a host computer system, the guest computer system is said to be a "virtual machine" as the guest computer system only exists in the host computer system as a pure software representation of the operation of one specific hardware architecture. The terms emulator, virtual machine, and processor emulation are sometimes used interchangeably to denote the ability to mimic or emulate the hardware architecture of an entire computer system. As an example, the Virtual PC software created by Connectix Corporation of San Mateo, California emulates an entire computer that includes an Intel 80X86 Pentium processor and various motherboard components and cards. The operation of these components is emulated in the virtual machine that is being run on the host machine. An emulator program executing on the operating system software and hardware architecture of the host computer, such as a computer system having a PowerPC processor, mimics the operation of the entire guest computer system.

The emulator program acts as the interchange between the hardware architecture of the host machine and the instructions transmitted by the software running within the emulated environment. This emulator program may be a host operating system (HOS), which is an operating system running directly on the physical computer hardware. Alternately, the emulated environment might also be a virtual machine monitor (VMM) which is a software layer that runs directly above the hardware and which virtualizes all the resources of the machine by exposing interfaces that are the same as the hardware the VMM is virtualizing (which enables the VMM to go unnoticed by operating system layers running above it). A host operating system and a VMM may run side-by-side on the same physical hardware.

Multiple virtual machines can be established on a single host machine. In this scenario, a host machine of a certain processor family may host several virtual machines of the same processor family. In this computing environment, each virtual machine operates as its own stand-alone computer system, which allows a user to install separate operating systems or multiple instances of a single operating system on one or more of the virtual machines. Because each virtual machine is independent of all other virtual machines and the host machine, software running within one virtual machine has no effect on the operation of any other virtual machines or the underlying host machine. Therefore, an emulated computing environment can support a number of operating systems, including an array of related operating systems or multiple, concurrent instances of the same operating system, on a single host computer system.

In this emulated computing environment, a user may run multiple virtualized computer systems on a single, physical computer system, which eliminates the need for multiple hardware systems to support multiple computer systems. As an alternative to purchasing and configuring an additional physical computer system, an additional virtual machine may be established on an existing computer system. Running multiple, independent virtual machines on a single, physical host machine provides, among other benefits, the ability to test software applications across multiple computing environments and support legacy software applications or operating systems. Running multiple virtual machines on a single host machine also results in a cost savings, in that the number of physical machines and their corresponding maintenance costs are reduced. Running multiple virtual machines on a single host machine also provides the benefit of operating system and application software isolation.

In addition, customers often wish to continue the use of legacy software technology, for example, because they have a business-critical system or some application that must remain on a legacy operating system because it was never upgraded to any modem operating system. Example legacy operating systems include MS-DOS™, Windows 3.X™, Windows 95™, Windows 98™, Windows Me™, Windows NT™, and Windows 2000™. Typically software manufacturers will "end-of-life" a product at some point in time, meaning that no further support is provided for these operating systems. For example, a software support cycle may be seven years, while the customer may need to run a particular operating system for fifteen years. Furthermore, these operating systems are typically purchased with a perpetual license, but in the event that additional capacity is needed, extending or acquiring additional licenses for an "end-of-life" product becomes problematic. Alternatively, these customers may chose to run this legacy software illegally, as there is no mechanism to purchase a legacy operating system. It would be beneficial to be able to enforce license agreements for legacy operating systems and legacy software applications in order to allow the customer to have assurance that he/she is legal in his/her use to avoid any possible penalties associated with operating illegally. What is needed is a software licensing mechanism for extending and/or acquiring a software license for legacy operating systems or applications, and to do so legally.

Moreover, software manufacturers do not generally provide ongoing support of legacy operating systems because, in order to do so, they must maintain, for example, a variety of Windows 95-era PCs in order to support all the configurations of Windows 95, which is not practical as the costs of providing such support far outpace the revenue to be generated from proving such support. However, one solution to this problem is for software manufacturers to use virtual machine environments to virtually replicate almost any configuration of hardware devices in a computing device without physically requiring every configuration of the computer. In this way, a single virtual machine environment provides a cost-effective way of supporting legacy operating systems, providing a new business opportunity for software manufacturers. With this added support, consumer interest in legacy software systems will also increase, particular for consumers looking to add a legacy system as a virtual machine on their modem systems, thus leading to additional sales opportunities. Therefore, what is needed is a software licensing mechanism, particularly within a virtual machine environment, for extending software licenses and maintaining support for legacy operating systems or applications.

The licensing of software technology is a main source of revenue for software manufacturers. In particular, a large portion of this business is the licensing of operating system software. The current scheme for the licensing of operating system software, however, is based on physical hardware (that is, licenses are made on a per hardware basis) which is an archic model that assumes that each physical computer system will include only a single operating system. However, this licensing scheme (the per hardware approach) and the existing software mechanisms for enforcing this licensing scheme do not fit the circumstance in which multiple, concurrent operating systems may exist as part of multiple virtual machines that operate on a single, physical host machine. Therefore, what is needed is a licensing scheme and software mechanism for enforcing the licensing of multiple, concurrent operating systems that exist as part of multiple virtual machines that operate on a single, physical host machine.

In addition, a cash flow problem for software developers exists, however, in current mechanisms for licensing operating systems. In the case of a personal computer (PC), for example, a license is purchased in a one-time transaction when the PC is purchased, and the license usually covers use of the software product for a single computer system (i.e., the license is on a per-hardware basis). As a result, license revenue is collected just once every few years when a user upgrades to a new computer and new operating system. What is needed is a software licensing model for use in a virtual machine environment that allows the software manufacturer to achieve an ongoing licensing revenue stream and also allows the customer to receive incremental value, such as software upgrades and support, in a cost-effective, practical way.

### SUMMARY OF THE INVENTION

Several embodiments of the present invention provide a means for collecting license revenue for operating systems or applications software that is resident in an emulated computer system. (As used herein, the term "emulated computer system" refers to all virtualized computer systems, including but not limited to system that, in operation, both emulate and/or directly execute guest operating system instructions.) Certain of these embodiments are specifically directed to providing a means for collecting license revenue for legacy operating systems or applications in a virtual machine environment in a manner the provides an ongoing revenue stream, rather than a one-time transaction, for a software manufacturer.

Certain embodiments of the present invention are directed to a system for and method of providing software license enforcement by using a license manager in a virtual machine environment and thereby provide improved methods of collecting license revenue in a computer system that supports legacy operating systems and applications. Additionally, certain embodiments use emulated peripheral devices, including a license card, for communicating with the license manager to request a license key. The function of the license manager is to monitor and enforce the software license restrictions on the operating system software used in the virtual machines. For some of these embodiments, the license manager functionality may resides in the host OS or a VMM of a computer system and be performed on a hardware system by hardware system basis; alternatively, the license manager functionality may reside on a separate physical machine that serves as a centralized repository of all available licenses and thereby provides a means of managing licenses across an enterprise-level configuration by supplying licenses to VMMs on physical systems across an organization. Finally, several embodiments of the present invention are directed to providing incremental software support and upgrades for operating systems and applications that run in a virtual machine environment.

### BRIEF DESCRIPTION OF THE DRAWINGS

The foregoing summary, as well as the following detailed description of preferred embodiments, is better understood when read in conjunction with the appended drawings. For the purpose of illustrating the invention, there is shown in the drawings exemplary constructions of the invention; however, the invention is not limited to the specific methods and instrumentalities disclosed. In the drawings:

Fig. 1 is a block diagram representing a computer system in which aspects of the present invention may be incorporated;

Fig. 2 illustrates the logical layering of the hardware and software architecture for an emulated operating environment in a computer system;

Fig. 3A illustrates a virtualized computing system;

Fig. 3B illustrates an alternative embodiment of a virtualized computing system comprising a virtual machine monitor running alongside a host operating system;

Fig. 4 is a diagram of the logical layers of the hardware and software architecture of a computer system that includes a license card and a license manager;

Fig. 5 is a flow diagram of the steps for initiating and licensing the operating system software of a virtual machine; and

Fig. 6 is a flow diagram of the steps for collecting operating system license revenue using a virtual machine environment.

### DETAILED DESCRIPTION OF ILLUSTRATIVE EMBODIMENTS

The inventive subject matter is described with specificity to meet statutory requirements. However, the description itself is not intended to limit the scope of this patent. Rather, the inventor has contemplated that the claimed subject matter might also be embodied in other ways, to include different steps or combinations of steps similar to the ones described in this document, in conjunction with other present or future technologies. Moreover, although the term "step" may be used herein to connote different elements of methods employed, the term should not be interpreted as implying any particular order among or between various steps herein disclosed unless and except when the order of individual steps is explicitly described.

### Computer Environment

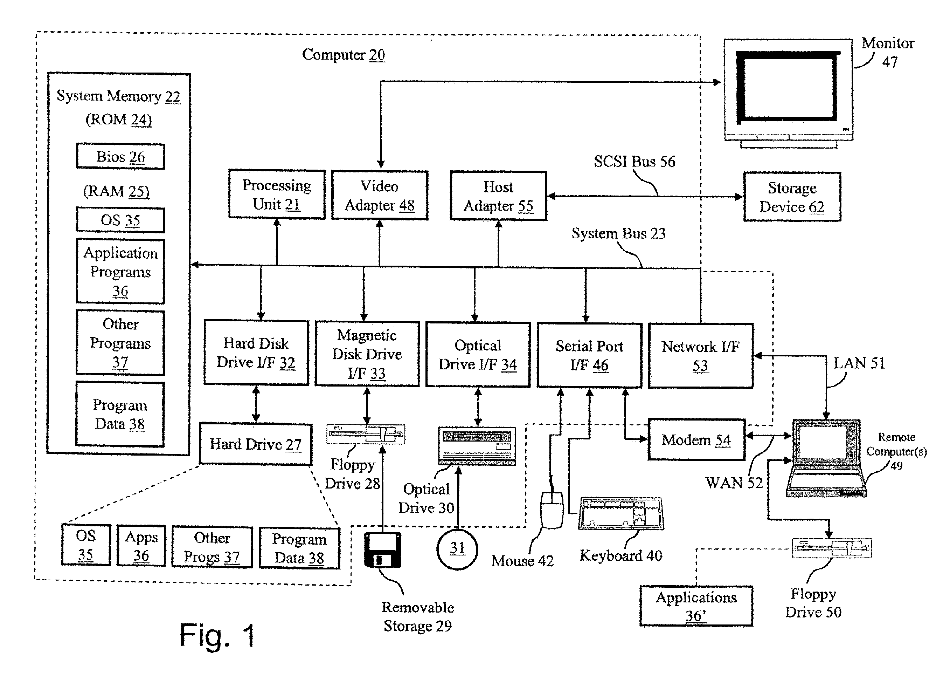

Numerous embodiments of the present invention may execute on a computer. Fig. 1 and the following discussion is intended to provide a brief general description of a suitable computing environment in which the invention may be implemented. Although not required, the invention will be described in the general context of computer executable instructions, such as program modules, being executed by a computer, such as a client workstation or a server. Generally, program modules include routines, programs, objects, components, data structures and the like that perform particular tasks or implement particular abstract data types. Moreover, those skilled in the art will appreciate that the invention may be practiced with other computer system configurations, including hand held devices, multi processor systems, microprocessor based or programmable consumer electronics, network PCs, minicomputers, mainframe computers and the like. The invention may also be practiced in distributed computing environments where tasks are performed by remote processing devices that are linked through a communications network. In a distributed computing environment, program modules may be located in both local and remote memory storage devices.

As shown in Fig. 1, an exemplary general purpose computing system includes a conventional personal computer 20 or the like, including a processing unit 21, a system memory 22, and a system bus 23 that couples various system components including the system memory to the processing unit 21. The system bus 23 may be any of several types of bus structures including a memory bus or memory controller, a peripheral bus, and a local bus using any of a variety of bus architectures. The system memory includes read only memory (ROM) 24 and random access memory (RAM) 25. A basic input/output system 26 (BIOS), containing the basic routines that help to transfer information between elements within the personal computer 20, such as during start up, is stored in ROM 24. The personal computer 20 may further include a hard disk drive 27 for reading from and writing to a hard disk, not shown, a magnetic disk drive 28 for reading from or writing to a removable magnetic disk 29, and an optical disk drive 30 for reading from or writing to a removable optical disk 31 such as a CD ROM or other optical media. The hard disk drive 27, magnetic disk drive 28, and optical disk drive 30 are connected to the system bus 23 by a hard disk drive interface 32, a magnetic disk drive interface 33, and an optical drive interface 34, respectively. The drives and their associated computer readable media provide non volatile storage of computer readable instructions, data structures, program modules and other data for the personal computer 20. Although the exemplary environment described herein employs a hard disk, a removable magnetic disk 29 and a removable optical disk 31, it should be appreciated by those skilled in the art that other types of computer readable media which can store data that is accessible by a computer, such as magnetic cassettes, flash memory cards, digital video disks, Bernoulli cartridges, random access memories (RAMs), read only memories (ROMs) and the like may also be used in the exemplary operating environment.

A number of program modules may be stored on the hard disk, magnetic disk 29, optical disk 31, ROM 24 or RAM 25, including an operating system 35, one or more application programs 36, other program modules 37 and program data 38. A user may enter commands and information into the personal computer 20 through input devices such as a keyboard 40 and pointing device 42. Other input devices (not shown) may include a microphone, joystick, game pad, satellite disk, scanner or the like. These and other input devices are often connected to the processing unit 21 through a serial port interface 46 that is coupled to the system bus, but may be connected by other interfaces, such as a parallel port, game port or universal serial bus (USB). A monitor 47 or other type of display device is also connected to the system bus 23 via an interface, such as a video adapter 48. In addition to the monitor 47, personal computers typically include other peripheral output devices (not shown), such as speakers and printers. The exemplary system of Fig. 1 also includes a host adapter 55, Small Computer System Interface (SCSI) bus 56, and an external storage device 62 connected to the SCSI bus 56.

The personal computer 20 may operate in a networked environment using logical connections to one or more remote computers, such as a remote computer 49. The remote computer 49 may be another personal computer, a server, a router, a network PC, a peer device or other common network node, and typically includes many or all of the elements described above relative to the personal computer 20, although only a memory storage device 50 has been illustrated in Fig. 1. The logical connections depicted in Fig. 1 include a local area network (LAN) 51 and a wide area network (WAN) 52. Such networking environments are commonplace in offices, enterprise wide computer networks, intranets and the Internet.

When used in a LAN networking environment, the personal computer 20 is connected to the LAN 51 through a network interface or adapter 53. When used in a WAN networking environment, the personal computer 20 typically includes a modem 54 or other means for establishing communications over the wide area network 52, such as the Internet. The modem 54, which may be internal or external, is connected to the system bus 23 via the serial port interface 46. In a networked environment, program modules depicted relative to the personal computer 20, or portions thereof, may be stored in the remote memory storage device. It will be appreciated that the network connections shown are exemplary and other means of establishing a communications link between the computers may be used. Moreover, while it is envisioned that numerous embodiments of the present invention are particularly well-suited for computerized systems, nothing in this document is intended to limit the invention to such embodiments.

### Virtual Machines

From a conceptual perspective, computer systems generally comprise one or more layers of software running on a foundational layer of hardware. This layering is done for reasons of abstraction. By defining the interface for a given layer of software, that layer can be implemented differently by other layers above it. In a well-designed computer system, each layer only knows about (and only relies upon) the immediate layer beneath it. This allows a layer or a "stack" (multiple adjoining layers) to be replaced without negatively impacting the layers above said layer or stack. For example, software applications (upper layers) typically rely on lower levels of the operating system (lower layers) to write files to some form of permanent storage, and these applications do not need to understand the difference between writing data to a floppy disk, a hard drive, or a network folder. If this lower layer is replaced with new operating system components for writing files, the operation of the upper layer software applications remains unaffected.

The flexibility of layered software allows a virtual machine (VM) to present a virtual hardware layer that is in fact another software layer. In this way, a VM can create the illusion for the software layers above it that said software layers are running on their own private computer system, and thus VMs can allow multiple "guest systems" to run concurrently on a single "host system."

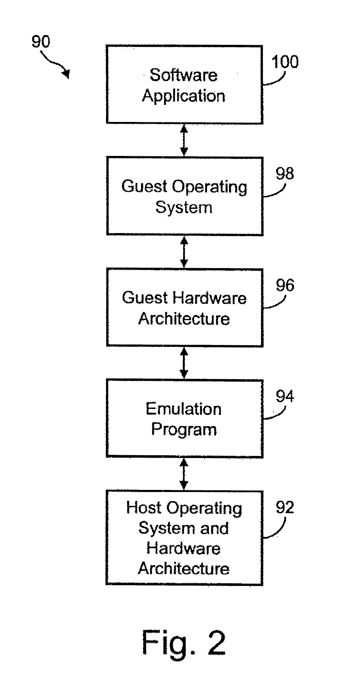

Fig. 2 is a diagram representing the logical layering of the hardware and software architecture for an emulated operating environment in a computer system. An emulation program 94 runs on a host operating system and/or hardware architecture 92. Emulation program 94 emulates a guest hardware architecture 96 and a guest operating system 98. Software application 100 in turn runs on guest operating system 98. In the emulated operating environment of Fig. 2, because of the operation of emulation program 94, software application 100 can run on the computer system 90 even though software application 100 is designed to run on an operating system that is generally incompatible with the host operating system and hardware architecture 92.

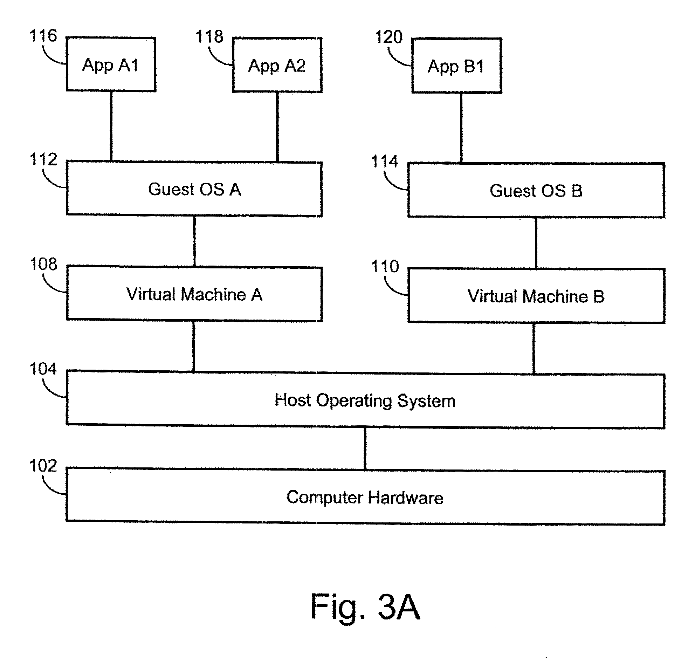

Fig. 3A illustrates a virtualized computing system comprising a host operating system software layer 104 running directly above physical computer hardware 102, and the host operating system (host OS) 104 virtualizes all the resources of the machine by exposing interfaces that are the same as the hardware the host OS is virtualizing (which enables the host OS to go unnoticed by operating system layers running above it).

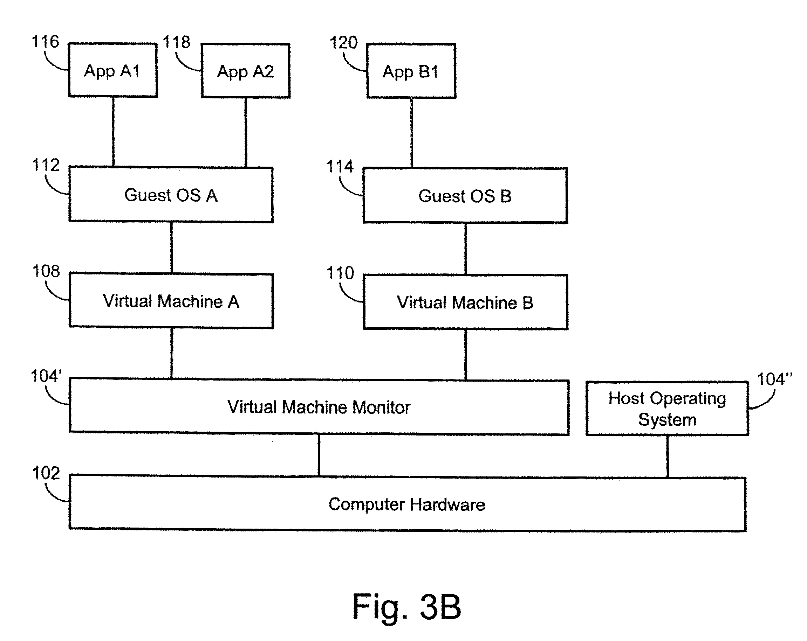

Alternately, a virtual machine monitor, or VMM, software layer 104' may be running in place of or alongside a host OS 104", the latter option being illustrated in Fig. 3B. For simplicity, all discussion hereinafter (specifically regarding the host operating system 104) shall be directed to the embodiment illustrated in Fig. 3A; however, every aspect of such discussion shall equally apply to the embodiment of Fig. 3B wherein the VMM 104' of Fig. 3B essentially replaces, on a functional level, the role of the host operating system 104 of Fig. 3A described herein below.

Referring again to Fig. 3A, above the host OS 104 (or VMM 104') are two virtual machine (VM) implementations, VM A 108, which may be, for example, a virtualized Intel 386 processor, and VM B 110, which may be, for example, a virtualized version of one of the Motorola 680X0 family of processors. Above each VM A 108 and 110 are guest operating systems (guest OSs) A 112 and B 114 respectively. Above guest OS A 112 are running two applications, application A1 116 and application A2 118, and above guest OS B 114 is application B1 120.

### VM Software License Enforcement

Various embodiments of the present invention are directed to a revised licensing model where a software product, such as an operating system, is licensed on a per-instance basis (instead of on a per-hardware basis). For a virtual machine environment, each VM would comprise an "instance" for which a license would be required. To support this licensing model, both automatic enforcement of licensing as well as an automated means of obtaining necessary licenses are beneficial.

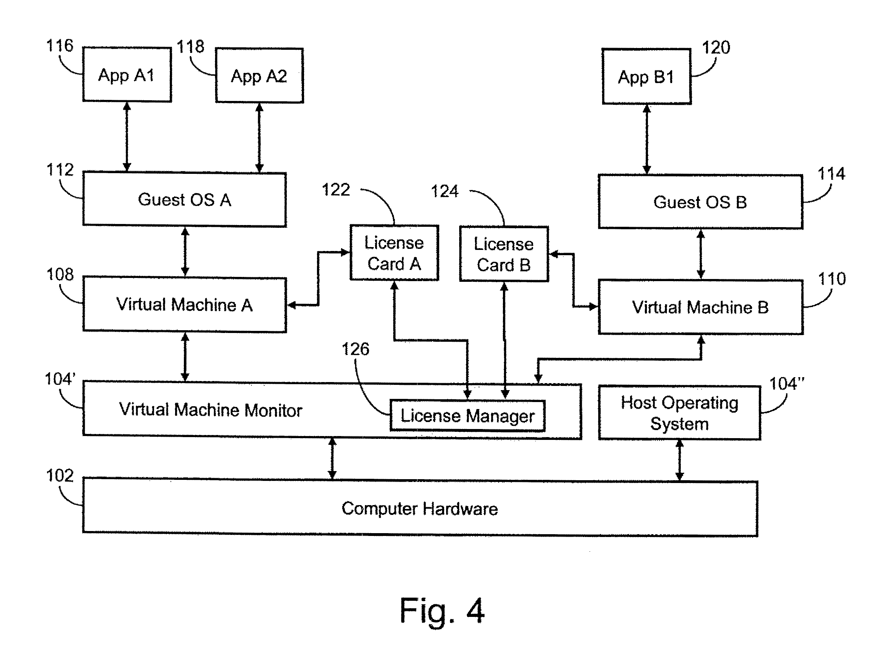

Fig. 4 illustrates portions of the system of Fig. 3B that further comprising an emulated hardware device, in this instance a license card, for each virtual machine. Shown in Fig. 4 is VM A 108 logically coupled to license card virtual device A 122 and VM B 110 logically coupled to a license card virtual device B 124. Fig. 4 also illustrates that VMM 104' further comprises a license manager (LM) 126 logically coupled to each license card virtual device 122 and 124. The emulated hardware device described in Fig. 4 regarding VM A 108 and VM B 110 is exemplary and any other VM in this virtual machine environment would comprise its own similar license card virtual device coupled to the LM 126. Of course, these license cards (e.g., 122 and 124) are emulated hardware devices that do not necessarily have (or need) a physical counterpart in the computer hardware 102.

From the perspective of guest OS A 112, license card A 122 appears to be similar to any other peripheral device that is controlled through a software driver. Upon recognizing the presence of license card A 122 during the initiation or boot phase, guest OS A 112 determines whether the associated driver for license card A 122 is installed. If the associated driver for license card A 122 has not been installed, guest OS A 112 attempts to retrieve and install the associated software driver.

The function of LM 126 is to automatically monitor and enforce the software license restrictions on, for example, the operating system software for each and every virtual machines, such as VM A 108 and VM B 110, that is run on a VMM. LM 126 includes a count of the number of licensed guest OSs that may be operating simultaneously in the virtual machines of the virtualized computing system. The number of licensed guest OSs may be one, two, six, or more, depending on the license rights purchased by the computer user. As for enforcement, since the VMM 104' monitors the itemization of plug and play devices by each of the guest OSs, e.g. guest OS A 112 and guest OS B 114, the addition by each VM 108 and 110 of their respective license card virtual devices 122 and 124 is recognized by the VMM 104' and formalized with the LM 126 automatically-that is, each license card 122 and 124 is automatically coupled to the LM 126 at the time a guest OS 112 and 114 recognize said virtual devices 122 and 124, which automatically happens as the operating system for each VM is started. Thereafter, when a license card 122 or 124 needs a license, this need is automatically communicated directly with LM 126 to request the necessary license key. If the LM is unable to obtain the necessary license keys for, say, and OS for specific VM, that VM is shut down by the VMM.

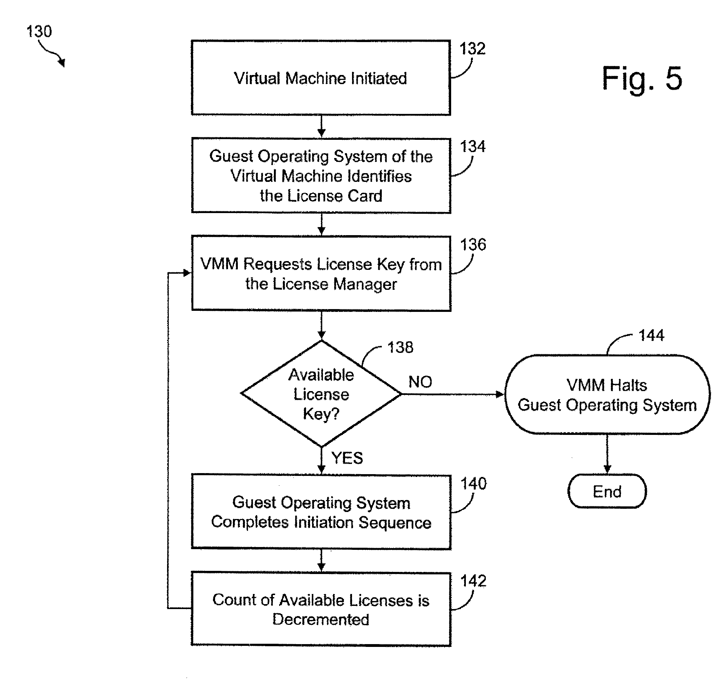

Fig. 5 is a flowchart that illustrates a method 130 of initiating and licensing the operating system software of a virtual machine. At step 132, the method first comprises the initiation sequence for a virtual machine. At step 134, a guest operating system identifies a license card. At step 136, VMM 104' communicates with LM 126 to request a license key. At step 138, LM 126 determines whether an additional OS license is available for the guest OS. If yes, at step 140, LM 126 passes a key or some other authorization code to VMM 104', which permits the guest OS to continue boot up. Ifno, at step 144, VMM 104' halts guest operating system and method 130 ends. Subsequently, at step 142, LM 126 decrements its count of available guest OS licenses or keys. At this point, the licensed guest OS is said to have consumed a key from LM 126. Once the count of available guest OS licenses reaches zero, no additional keys or authorizations are issued by LM 126. In an alternative embodiment, the LM may also comprise a subsystem for automatically obtaining additional licenses from a license vendor and, if unsuccessful at obtaining additional licenses, then proceeding to shut down the unlicensed guest OS.

For example, if the count of available guest OSs is zero, and if VMM 104' requested a licenser key, LM 126 would notify VMM 104' that no additional guest OS licenses are available. VMM 104' would then interrupt the boot sequence of the virtual machine and prevent the operating system software of the associated virtual machine from running, as shown in step 144. LM 126 maintains a record of the licensed guest OSs. If a licensed guest operating system is terminated, VMM 104'notifies LM 126, which increments the count of available guest OSs. The termination of a licensed guest OS has the effect of returning a key to LM 126.

The transfer of the license key from LM 126 to each virtual machine is accomplished in a secure transport medium. As part of the key transfer process, the operating system vendor may seek to transfer encrypted handshaking signals to the guest OS to confirm that the guest OS is a licensable version of host OS 104". Communications to and from the guest OS can be accomplished through an emulated hardware device, such as license card A 124. License card A 124 would communicate the encrypted signals to VMM 104', which could pass the encrypted signals to LM 126 of host OS 104". The logical relationship of license card 124, VMM 104', and LM 126 are shown in Fig. 4. Alternatively, the host OS 104" and the guest OSs could communicate encrypted signals through the hardware abstraction layer of the virtualized computing system.

LM 126 will perform periodic queries of each of the virtual machines to confirm the software licensing status of each of the operating systems of the virtual machines. The periodic license checks confirm that the operating system of each virtual machine was licensed by LM 126 and that none of the virtual machines have stalled or timed out. If it is determined that any of the guest OSs was not licensed by LM 126, LM 126 will determine whether a license is available for the unlicensed guest OS, i.e., whether the count of available guest OS licenses is greater than zero. If an unlicensed guest OS is detected, and if additional license keys are available, the count of available licenses will be decremented and the unlicensed guest OS will be licensed by LM 126. If an unlicensed guest OS is detected, and if no additional license keys are available, the unlicensed guest OS will be halted or terminated.

Problems that result from unlicensed guest OSs may occur in the example where a virtual machine has been halted and migrated between physical computer systems. In this example, a virtual machine may be initiated and licensed for use on a computer system with available license keys. This virtual machine may then be halted and migrated to another computer system with no available license keys. The periodic querying of the virtual machines by the license manager will detect this migrated virtual machine, which will result in either obtaining an additional license (either by purchase or from another LM) for the migrated virtual machine in the destination computer system or the termination of the migrated virtual machine in the destination computer system.

### VM software license revenue collection

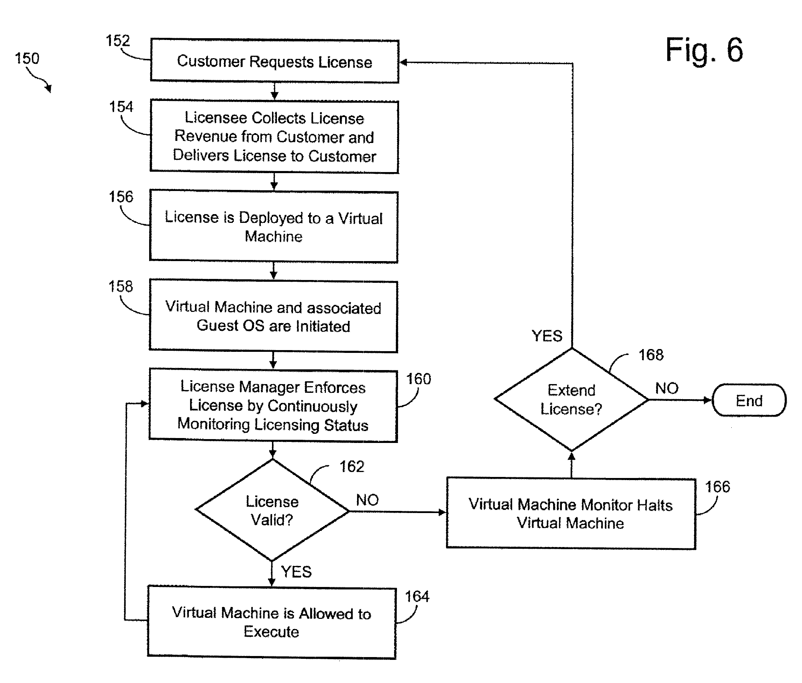

Fig. 6 is a flowchart that illustrates a method 150 of collecting operating system license revenue by using a virtual machine environment. More specifically, method 150 of the present invention provides a means for collecting license revenue for modem or legacy operating systems or applications in a virtual machine environment in a manner that provides an ongoing revenue stream, rather than a one-time transaction, for a software manufacturer.

At step 152, the method first comprises the customer requesting a software license from the software manufacturer. At step 154, the software manufacturer (or licensee) sets the fee amount for the requested software license according to, for example, the time duration of the license requested and receives payment accordingly from the customer. This payment may be in the form of a one-time payment for a perpetual license agreement; however, in a preferred embodiment, the payment is a monthly or annual payment (or any predetermined time period) associated with a renewable license agreement, which ensures a constant revenue stream for the software manufacturer and also provides an advantage to the customer of receiving software upgrades, if available, upon each renewal. Upon initial purchase or renewal of the software license by the customer, the software manufacturer creates the software license and, subsequently, delivers the software license to the customer, for example, electronically (i.e., via email), via a compact disk (CD), or any suitable means. At step 156, the customer determines which virtualized computing system the license is to be deployed on. With continuing reference to Fig. 4, the license is then deployed to the LM 126 of a given VMM 104'. At step 158 of Fig. 6, a virtual machine and associated guest OS, such as VM A 108 and guest OS A 112 of Fig. 4, are initiated according to method 130, as described in Fig. 5. At step 160, the LM 126 of any given VMM 104' continuously monitors the status of the license by monitoring the license attributes to determine whether conditions exist that would disallow its use. Attributes include, for example, the OS type or version, the start date, which establishes the beginning of the license, the duration of the license, which then determines the ending date, and the capacity (i.e., how many users are allowed), among other things. At step 162, if the license is valid because there are no violations of the license attributes, the VM and guest OS are allowed to execute, as indicated in step 164, while being continuously monitored, as described in step 160. However, at step 162, if the license is no longer valid because of violations, such as time expiration, as established in the license attributes, the VMM 104' halts the VM and guest OS, as indicated in step 166. At step 168, in the event that the VM and guest OS are halted, the customer is notified and subsequently decides whether he/she wishes to extend (renew) the software license. If the customer does not wish to renew the license agreement, the VM and guest OS in question remain halted. If the customer does wish to renew the license agreement, the customer again requests the software license from the software manufacturer, as indicated in step 1.52. Furthermore, at time of renewal, the software manufacturer may provide any incremental software upgrades or support to the customer that may exist.

With continuing reference to Figs. 4, 5, and 6, in alternative embodiments, the license manager functionality resides on a separate, physical machine that serves as a centralized repository of all available licenses and thereby provides a means of managing licenses across an enterprise-level configuration, by supplying licenses to VMMs on physical systems across an organization. This arrangement provides a further advantage in that it allows the customer to dynamically balance their licenses within their organization, such as an enterprise, a datacenter at the server level, or upon desktop PCs in a large organization.

The present invention is not limited in its application to the emulation of a particular computer system architecture, particularly the Intel 80X86 architecture. Rather, the emulation technique disclosed herein is applicable at any time that it is desirable to license multiple instances of software in a virtual or emulated computing environment. It should also be understood that the present invention is not limited to the licensing of operating system software. The techniques described herein may be used to establish a licensing protocol for application software in a virtual or emulated computing environment. It should be also understood that the use of the present invention is not limited to those computing environments in which the host operating system and the licensed operating system are identical. The techniques of the present invention could be employed in those instances in which the host operating system and the guest operating systems are variants within the same family of operating systems. Alternatively, the host operating systems and one or more of the guest operating systems could be operating systems associated with different hardware platforms.

Although the present invention has been described in detail, it should be understood that various changes, substitutions, and alterations can be made thereto without departing from the spirit and scope of the invention, as defined by the appended claims.

### Conclusion

The various systems, methods, and techniques described herein may be implemented with hardware or software or, where appropriate, with a combination of both. Thus, the methods and apparatus of the present invention, or certain aspects or portions thereof, may take the form of program code (i.e., instructions) embodied in tangible media, such as floppy diskettes, CD-ROMs, hard drives, or any other machine-readable storage medium, wherein, when the program code is loaded into and executed by a machine, such as a computer, the machine becomes an apparatus for practicing the invention. In the case of program code execution on programmable computers, the computer will generally include a processor, a storage medium readable by the processor (including volatile and non-volatile memory and/or storage elements), at least one input device, and at least one output device. One or more programs are preferably implemented in a high level procedural or object oriented programming language to communicate with a computer system. However, the program(s) can be implemented in assembly or machine language, if desired. In any case, the language may be a compiled or interpreted language, and combined with hardware implementations.

The methods and apparatus of the present invention may also be embodied in the form of program code that is transmitted over some transmission medium, such as over electrical wiring or cabling, through fiber optics, or via any other form of transmission, wherein, when the program code is received and loaded into and executed by a machine, such as an EPROM, a gate array, a programmable logic device (PLD), a client computer, a video recorder or the like, the machine becomes an apparatus for practicing the invention. When implemented on a general-purpose processor, the program code combines with the processor to provide a unique apparatus that operates to perform the indexing functionality of the present invention.

While the present invention has been described in connection with the preferred embodiments of the various figures, it is to be understood that other similar embodiments may be used or modifications and additions may be made to the described embodiment for performing the same function of the present invention without deviating there from. For example, while exemplary embodiments of the invention are described in the context of digital devices emulating the functionality of personal computers, one skilled in the art will recognize that the present invention is not limited to such digital devices, as described in the present application may apply to any number of existing or emerging computing devices or environments, such as a gaming console, handheld computer, portable computer, etc. whether wired or wireless, and may be applied to any number of such computing devices connected via a communications network, and interacting across the network. Furthermore, it should be emphasized that a variety of computer platforms, including handheld device operating systems and other application specific hardware/software interface systems, are herein contemplated, especially as the number of wireless networked devices continues to proliferate. Therefore, the present invention should not be limited to any single embodiment, but rather construed in breadth and scope in accordance with the appended claims.

Finally, the disclosed embodiments described herein may be adapted for use in other processor architectures, computer-based systems, or system virtualizations, and such embodiments are expressly anticipated by the disclosures made herein and, thus, the present invention should not be limited to specific embodiments described herein but instead construed most broadly. Likewise, the use of synthetic instructions for purposes other than processor virtualization are also anticipated by the disclosures made herein, and any such utilization of synthetic instructions in contexts other than processor virtualization should be most broadly read into the disclosures made herein.

## Claims

1. A method of licensing a software product for utilization by a plurality of virtual machines in a virtual machine environment, said method comprising licensing said software product on a virtual machine by virtual machine basis.

2. The method of claim 1 further comprising enforcing licensing compliance for each virtual machine among said plurality of virtual machines in said virtual machine environment.

3. The method of claim 2 wherein said element of enforcing licensing compliance for each virtual machine among said plurality of virtual machines in said virtual machine environment further comprises automatically utilizing a license card virtual device for each said virtual machine, said license card virtual device logically coupled to a license manager, said license manager allowing said software product to execute on said virtual machine only when a license for said software product for said virtual machine is available to the virtual machine and can be assigned to said virtual machine.

4. The method of claim 3 wherein said software product is an operating system.

5. The method of claim 3 wherein said license manager obtains at least one new license from a license vendor when an additional license is required for a virtual machine.

6. The method of claim 1 further comprising automatically obtaining at least one additional licensing for a virtual machine in said virtual machine environment when such a license is not present and available for said virtual machine.

7. The method of claim 1 wherein said software product is an operating system, said method further comprising the following elements for implementing said method:
initiating a virtual machine, said virtual machine comprising a license card virtual device;
assigning a license key to said license card of said virtual machine if a license key is available; and
if a license key is not available, halting execution of said virtual machine.

8. The method of claim 7 further comprising, before the element of assigning a license key, determining if a license key will be available if needed and, if not, acquiring at least one additional license key from a license vendor.

9. A system for licensing a software product for utilization by a plurality of virtual machines in a virtual machine environment, said system comprising at least one subsystem for licensing said software product on a virtual machine by virtual machine basis.

10. The system of claim 9 further comprising at least one subsystem for enforcing licensing compliance for each virtual machine among said plurality of virtual machines in said virtual machine environment.

11. The system of claim 10 further comprising at least one subsystem for utilizing a license card virtual device for each said virtual machine, said license card virtual device logically coupled to a license manager, said license manager allowing said software product to execute on said virtual machine only when a license for said software product for said virtual machine is available to the virtual machine and can be assigned to said virtual machine.

12. The system of claim 11 wherein said software product is an operating system.

13. The system of claim 11 said further comprising at least one subsystem for said license manager to obtain at least one new license from a license vendor when an additional license is required for said virtual machine.

14. The system of claim 9 further comprising at least one subsystem for automatically obtaining at least one additional licensing for a virtual machine in said virtual machine environment when such a license is not present and available for said virtual machine.

15. The system of claim 9 wherein said software product is an operating system, said method further comprising at least one subsystem for:
initiating a virtual machine, said virtual machine comprising a license card virtual device;
assigning a license key to said license card of said virtual machine if a license key is available; and
if a license key is not available, halting execution of said virtual machine.

16. The system of claim 15 further comprising at least one subsystem for, before the element of assigning a license key, determining if a license key will be available if needed and, if not, acquiring at least one additional license key from a license vendor.

17. A computer-readable medium comprising computer-readable instructions for licensing a software product for utilization by a plurality of virtual machines in a virtual machine environment, said computer-readable instructions comprising instructions for licensing said software product on a virtual machine by virtual machine basis.

18. The computer-readable instructions of claim 17 further comprising instructions for enforcing licensing compliance for each virtual machine among said plurality of virtual machines in said virtual machine environment.

19. The computer-readable instructions of claim 18 further comprising instructions whereby enforcing licensing compliance for each virtual machine among said plurality of virtual machines in said virtual machine environment by utilizing a license card virtual device for each said virtual machine, said license card virtual device logically coupled to a license manager, said license manager allowing said software product to execute on said virtual machine only when a license for said software product for said virtual machine is available to the virtual machine and can be assigned to said virtual machine.

20. The computer-readable instructions of claim 19 further comprising instructions whereby said software product is an operating system.

21. The computer-readable instructions of claim 19 further comprising instructions for said license manager to obtain at least one new license from a license vendor when an additional license is required for a virtual machine.

22. The computer-readable instructions of claim 17 further comprising instructions for automatically obtaining at least one additional licensing for a virtual machine in said virtual machine environment when such a license is not present and available for said virtual machine.

23. The computer-readable instructions of claim 17, wherein said software product is an operating system, said computer-readable instructions further comprising instructions for:
initiating a virtual machine, said virtual machine comprising a license card virtual device;
assigning a license key to said license card of said virtual machine if a license key is available; and
if a license key is not available, halting execution of said virtual machine.

24. The computer-readable instructions of claim 23 further comprising instructions for, before the element of assigning a license key, determining if a license key will be available if needed and, if not, acquiring at least one additional license key from a license vendor.

25. A hardware control device for licensing a software product for utilization by a plurality of virtual machines in a virtual machine environment, said hardware control device comprising means for licensing said software product on a virtual machine by virtual machine basis.

26. The hardware control device of claim 25 further comprising means for enforcing licensing compliance for each virtual machine among said plurality of virtual machines in said virtual machine environment.

27. The hardware control device of claim 26 further comprising means for automatically utilizing a license card virtual device for each said virtual machine, said license card virtual device logically coupled to a license manager, said license manager allowing said software product to execute on said virtual machine only when a license for said software product for said virtual machine is available to the virtual machine and can be assigned to said virtual machine.

28. The hardware control device of claim 27 wherein said software product is an operating system.

29. The hardware control device of claim 27 further comprising means whereby said license manager obtains at least one new license from a license vendor when an additional license is required for a virtual machine.

30. The hardware control device of claim 25 further comprising means for automatically obtaining at least one additional licensing for a virtual machine in said virtual machine environment when such a license is not present and available for said virtual machine.

31. The hardware control device of claim 25 wherein said software product is an operating system, said hardware control device further comprising means for:
initiating a virtual machine, said virtual machine comprising a license card virtual device;
assigning a license key to said license card of said virtual machine if a license key is available; and
if a license key is not available, halting execution of said virtual machine.

32. The hardware control device of claim 31 further comprising means for, before the element of assigning a license key, determining if a license key will be available if needed and, if not, acquiring at least one additional license key from a license vendor.
